# EUROPEAN PATENT APPLICATION

(11) **EP 3 909 415 A1**
(43) Date of publication of application: **17.11.2021**
(21) Application number: 20174347.3
(22) Date of filing: 13.05.2020
(51) Int. Cl.: A01D 43/063, A01D 34/71

(54) **GRASS MOWING MACHINE**

(71) Applicant: Kubota Corporation, Osaka-shi, Osaka 556-8601 (JP)
(72) Inventor: HIRAI, Ryota, SAKAI-SHI, OSAKA, 590-0823 (JP); MATSUMOTO, Ryo, SAKAI-SHI, OSAKA, 590-0823 (JP); AKITA, Masayuki, SAKAI-SHI, OSAKA, 590-0823 (JP); HABU, Kentaro, SAKAI-SHI, OSAKA, 590-0823 (JP); HASHIMOTO, Taisuke, SAKAI-SHI, OSAKA, 590-0823 (JP); KANAI, Toshiki, SAKAI-SHI, OSAKA, 590-0823 (JP); KAGO, Tatsuki, SAKAI-SHI, OSAKA, 590-0823 (JP); TOKUNAGA, Tatsuro, SAKAI-SHI, OSAKA, 590-0823 (JP); TASHIMA, Shinya, SAKAI-SHI, OSAKA, 590-0823 (JP); AKAI, Yuto, SAKAI-SHI, OSAKA, 590-0823 (JP); MIYAGUCHI, Kazutomo, SAKAI-SHI, OSAKA, 590-0823 (JP)
(74) Representative: Cabinet Beau de Loménie

(57) **Abstract**

A grass mowing machine includes a mower (4) disposed under a machine body and configured to discharge cut grass pieces sent from a discharging section (34) to the outside, a duct (35) connected to the discharging section (34) to be in communication thereto and configured to guide the cut grass pieces from the discharging section (34) and a grass collecting section disposed at a rear portion of the machine body and configured to collect the cut grass pieces guided by the duct (35). A deformation preventing member (H) is provided for preventing posture deformation at a connecting portion of the duct (35) for its connection to the discharging section (34).

## Description

### TECHNICAL FIELD

The present invention relates to a grass mowing machine including a mower disposed under a machine body and configured to discharge cut grass pieces sent from a discharging section to the outside, a duct connected to the discharging section to be in communication thereto and configured to guide the cut grass pieces from the discharging section, and a grass collecting section disposed at a rear portion of the machine body and configured to collect the cut grass pieces guided by the duct.

### BACKGROUND ART

In this type of grass mowing machine, the discharging section formed in the mower and an inlet of the duct are connected by insertion to be engaged with each other. With utilizing conveying air current generated by the mower, cut grass pieces will be air-conveyed and guided from the discharging section to the grass collecting section via a conveying passage continuous with the inside of the duct. The duct is supported to a frame provided on the side of the grass collecting section. And, conventionally, in order to maintain a state of the bottom of the conveying passage being continuous thereto while allowing lifting up/down of the mower which is supported to be liftable up/down via a link mechanism, the bottom of the duct is configured to be changeable in its posture relative to the duct body in association with lifting up/down of the mower (see Patent Document 1).

### BACKGROUND ART DOCUMENT

### PATENT DOCUMENT

Patent Document 1: Japanese Unexamined Patent Application Publication No. 2016-140264.

### SUMMARY OF THE INVENTION

### PROBLEM TO BE SOLVED BY INVENTION

In the conventional arrangement described above, the discharging section is supported to the mower side and the duct is supported to the frame on the side of the grass collecting section. Thus, for example, there may occur rolling of the grass collecting section relative to the machine body in association with a grass mowing work or the grass collecting section may be exposed to a significant force as a result of coming into accidental contact with an object present in a field ridge or the like. In such case, at the inlet of the duct which constitutes the connecting portion for its connection with the discharging section, a gap may be formed between the discharging section and the inlet of the duct. And, if such gap enlarges, this may lead to risk that cut grass pieces passing inside the duct as being air-conveyed and guided may be discharged inadvertently through this gap to the outside.

In particular, in the case of the above-described arrangement in which the bottom of the duct is configured to be posture-changeable relative to the duct body, the duct body will be provided in the form of a downwardly opened U-shape having a ceiling face and left and right side faces, so that there was high possibility of deformation of the lower end side portions of the duct body.

Thus, there is a need to prevent such inadvertent discharging of cut grass pieces conveyed via a duct to the outside (surrounding).

### SOLUTION

According to a characterizing feature of a grass mowing machine relating to the present invention, the grass mowing machine comprises:
a mower disposed under a machine body and configured to discharge cut grass pieces sent from a discharging section to the outside:
a duct connected to the discharging section to be in communication thereto and configured to guide the cut grass pieces from the discharging section; and
a grass collecting section disposed at a rear portion of the machine body and configured to collect the cut grass pieces guided by the duct;
wherein a deformation preventing member is provided for preventing posture deformation at a connecting portion of the duct for its connection to the discharging section.

With the above-described inventive arrangement, deformation of the duct can be prevented by the deformation preventing member. Thus, even when an external force is applied to the duct due to application of a large force resulting from pitching of the machine body associated with a grass mowing work or the grass collecting section coming into accidental contact with an object present in a field ridge or the like, formation of a large gap between the discharging section and the inlet of the duct can be avoided.

As a result, it has become possible to prevent inadvertent discharging of cut grass pieces conveyed via the duct to the outside (surrounding).

Preferably, in the above-described inventive arrangement, the deformation preventing member is provided between the connecting portion of the duct for its connection to the discharging section and a machine-body side fixed portion, so that the deformation preventing member prevents the posture deformation of the duct by being received by the machine-body side fixed portion.

With the above-described inventive arrangement, as being received by the machine-body side fixed portion having high rigidity, the deformation preventing member can reliably prevent posture deformation of the duct.

Preferably, in the above-described inventive arrangement, the machine-body side fixed portion comprises a transmission case incorporating a transmission mechanism for transmitting power to a traveling wheel.

With the above-described inventive arrangement, as the transmission case incorporates a transmission mechanism for transmitting power, thus having high rigidity, the transmission case is not easily deformed. Moreover, since the transmission case is disposed at a position near the duct under the machine body in order to transmit power to a traveling device, the transmission case can support the deformation preventing member without need for any special support member.

Preferably, in the above-described inventive arrangement:
the transmission case comprises two halved separate cases flange-connected to each other; and
the deformation preventing member is connected to the transmission case and fastened therewith via a flange-connecting bolt of the transmission case.

With the above-described inventive arrangement, with utilization of the flange-connecting bolt included in the transmission case for its flange-connection, the deformation preventing member is fastened and connected. Thus, the deformation preventing member can be attached by such simple arrangement, without providing any additional member for the connection.

Preferably, in the above-described inventive arrangement:
the mower is supported to the machine body to be liftable up/down relative thereto;
a bottom plate of the duct is changed in its posture in association with a lifting up/down of the mower;
a coupling mechanism is provided for operably coupling the mower to the bottom plate;
the deformation preventing member is provided between the connecting portion of the duct for its connection to the discharging section and the coupling mechanism; and
the deformation preventing member is received by the coupling mechanism for preventing posture deformation of the duct.

With the above-described inventive arrangement, as the posture of the bottom plate of the duct is changed in association with a lifting up/down of the mower, by an operative coupling operation provided by the coupling mechanism, the posture of the bottom plate of the duct is changed, so that condition of smooth conveying of cut grass pieces can be maintained. Incidentally, such coupling mechanism needs to be provided at a position near the lateral side of the duct for the purpose of operative coupling of the mower to the bottom plate of the duct. Then, through utilization of such coupling mechanism, the deformation preventing member can be supported by such simple arrangement, without providing any special support member.

Preferably, in the above-described inventive arrangement, the deformation preventing member includes a support face extending along the lateral face of the duct and the deformation preventing member prevents posture deformation of the duct as it comes into contact with the duct via the support face.

With the above-described inventive arrangement, it becomes readily possible to avoid strain or deformation of the duct when the deformation preventing member comes into contact with the lateral face of the duct.

### BRIEF DESCRIPTION OF THE DRAWINGS

Fig. 1 is a general side view of a grass mowing machine,
Fig. 2 is a general plan view of the grass mowing machine,
Fig.3 is a plan view of a mower,
Fig. 4 is a side view showing a mower disposing portion under a ground contacting state,
Fig. 5 is a side view in vertical section showing a discharging section and a duct under the ground contacting state,
Fig. 6 is a side view showing the mower disposing portion under an elevated state,
Fig. 7 is a side view in vertical section showing the discharging section and the duct under the elevated state,
Fig. 8 is a plan view in horizontal section showing the discharging section and the duct,
Fig. 9 is a front view in vertical section showing the duct,
Fig. 10 is a perspective view showing an operation coupling arrangement,
Fig. 11 is a block diagram showing an abnormality detection device,
Fig. 12 is a plan view showing a mower coupling mechanism of a further embodiment and a deformation preventing member of a further embodiment,
Fig. 13 is a front view in vertical section showing the mower coupling mechanism of the further embodiment and the deformation preventing member of the further embodiment, and
Fig. 14 is a left side view showing the mower coupling mechanism of the further embodiment and the deformation preventing member of the further embodiment.

### EMBODIMENTS

Next, embodiments of the present invention will be explained with reference to the accompanying drawings.

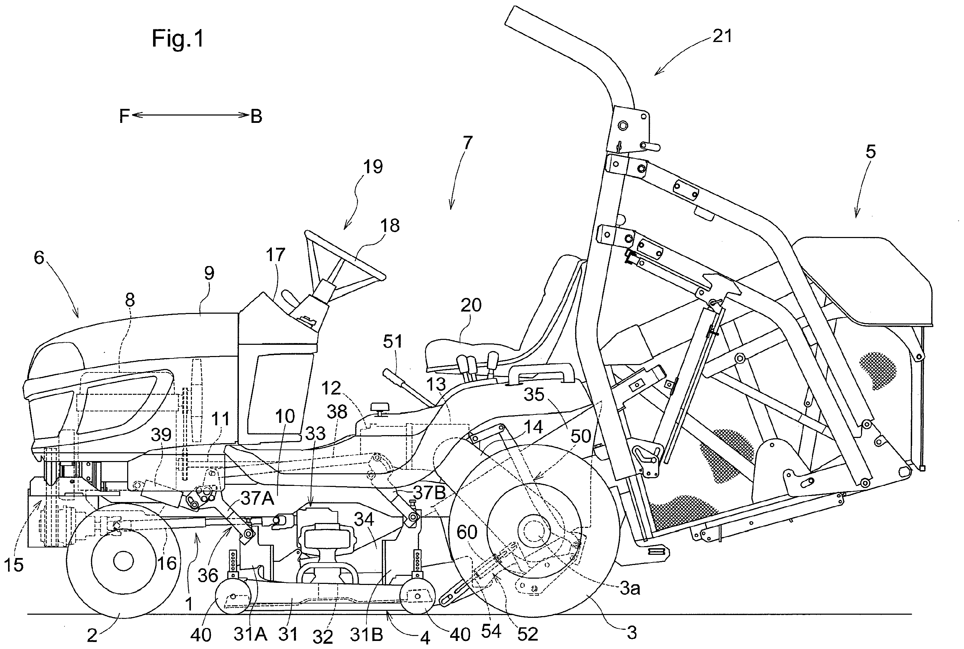

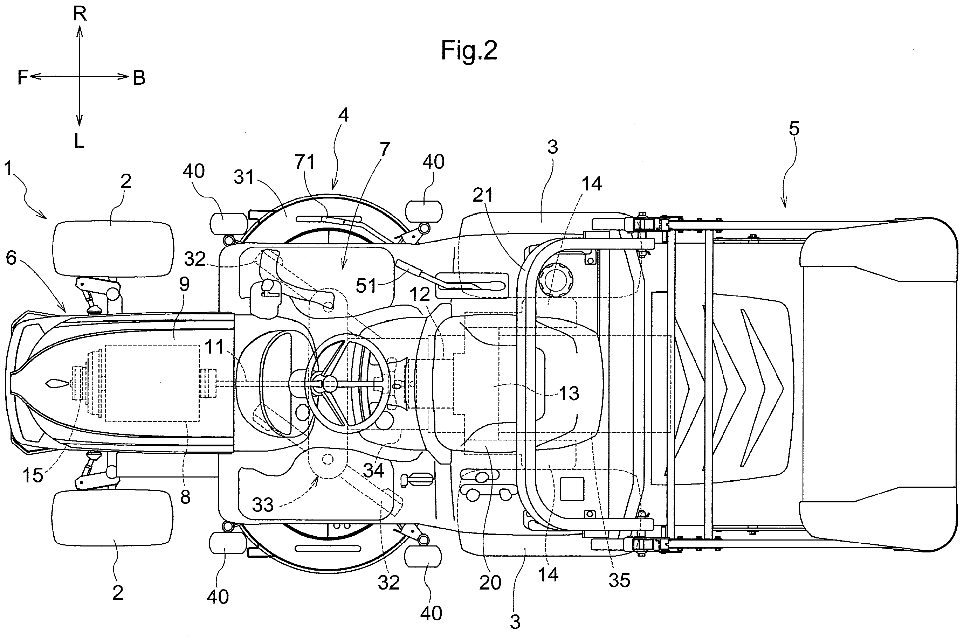

Incidentally, in the following detailed disclosure, the front/rear direction and the left/right direction are defined as follows, unless explicitly indicated otherwise. Namely, the advancing direction (see arrow F in Fig. 1) on the forward traveling side at the time of a work traveling of a riding type grass mowing machine relating to the present invention is defined as "front" and the advancing direction to the rear side (see arrow B in Fig. 2) is defined as "rear". And, the direction corresponding to the right side (see arrow R in Fig. 2) relative to the forwardly oriented posture in the front/rear direction is defined as "right" and the direction on the left side similarly (see arrow L in Fig. 2) is defined as the "left", respectively.

### [General Configuration]

As shown in Figs. 1 and 2, a grass mowing machine includes a pair of left and right steerable front wheels 2 on the front side of a traveling machine body 1 and includes a pair of left and right drivable rear wheels 3 on the rear side for self-propelled traveling of the machine. Under the vehicle body and between the front wheels 2 and the rear wheels 3 in the front/rear direction, a rear discharge type mower 4 is suspended to be liftable up/down. On the rear side of the traveling machine body 1, there is provided a grass collecting container 5 as a "grass collecting section" for accommodating grass pieces cut or mowed by the mower 4.

An engine section 6 is provided at a front portion of the traveling machine body 1 and on the rear side of the engine section 6, a riding driving section 7 is provided. In the engine section 6, an engine 8, as being accommodated in an engine hood 9, is mounted and supported to a machine body frame 10. Power taken out from the rear side of the engine 8 is inputted via a transmission shaft 11 extending rearwards to a hydrostatic stepless speed changer device (HST) 12 disposed rearwardly. An output from the hydrostatic stepless speed changer device 12 is transmitted via a transmission case 13 provided at a rear portion and chain transmission mechanisms (not shown) incorporated within transmission cases 14 on the left and right opposed sides to left and right rear axles 3a to drive the rear wheels 3. Each transmission case 14 extends obliquely rearwardly downwards from a lateral side of the transmission case 13.

Forwardly of the engine 8, there is provided a PTO mechanism 15 constituted of a belt transmission mechanism. And, via a PTO shaft 16 included in the PTO mechanism 15 and a transmission mechanism 33 provided at an upper portion of the mower 4, power of the engine 8 is transmitted to the mower 4.

In the riding driving section 7, there is provided a maneuvering section 19 including a maneuvering panel 17 continuous with the rear side of the engine hood 9, a steering wheel 18 capable of steering the front wheels 2, etc. And, rearwardly of the maneuvering section 19, a driver's seat 20 is disposed and at a portion of the rear side of the driver's seat 20, a ROPS 21 is provided.

### [Abnormality Detection Device]

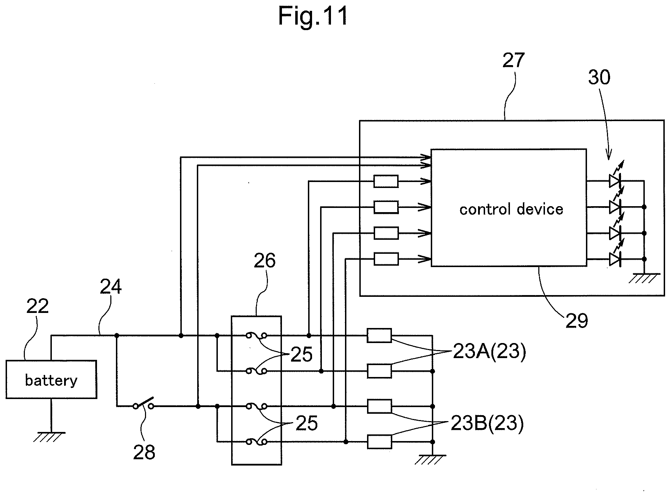

This grass mowing machine, as shown in Fig. 11, mounts a battery 22 and electric power is supplied to a plurality of electric power loads 23. Power supply lines 24 for the plurality of electric power loads 23 each incorporates a fuse 25, so as to prevent abnormality due to over current. And, the plurality of fuses 25 are accommodated together within a fuse box 26. And, this grass mowing machine includes an abnormality detection device 27 for allowing immediate notification of occurrence of cutting of a certain fuse 25 in association with e.g. an ongoing work, in order to allow recognition of which fuse 25 has been molten.

The electric power loads 23 are divided into a group (type) of loads 23B which respectively is energized in response to an ON operation of a key switch 28 and a group (type) of loads 23A which respectively is energized irrespectively of ON/OFF of the key switch 28. To either type of load 23, electric power is supplied via the fuse 25. The abnormality detection device 27 includes a control device 29 for determining an abnormality and a plurality of LED lamps 30 corresponding to the plurality of fuses 25. The control device 29 receives input of information on the power supply lines 24 on the upstream positions and downstream positions in the power supplying direction of the fuses 25. Then, based on the information of the power supply lines 24 at the upstream positions and the downstream positions, the control device 29 causes an LED lamp 30 corresponding to a molten fuse 25 to illuminate. With this, a worker can immediately judge which fuse 25 has been molten. Incidentally, Fig. 11 shows a case in which there are four electric power loads 23. However, the number of loads 23 is not limited to four, but, five or more electric power loads 23 may be provided for instance. And, in such arrangement too, the fuses 25 and the LED lamps 30 will be provided in correspondence with the respective electric power loads 23.

### [Arrangement of Mower]

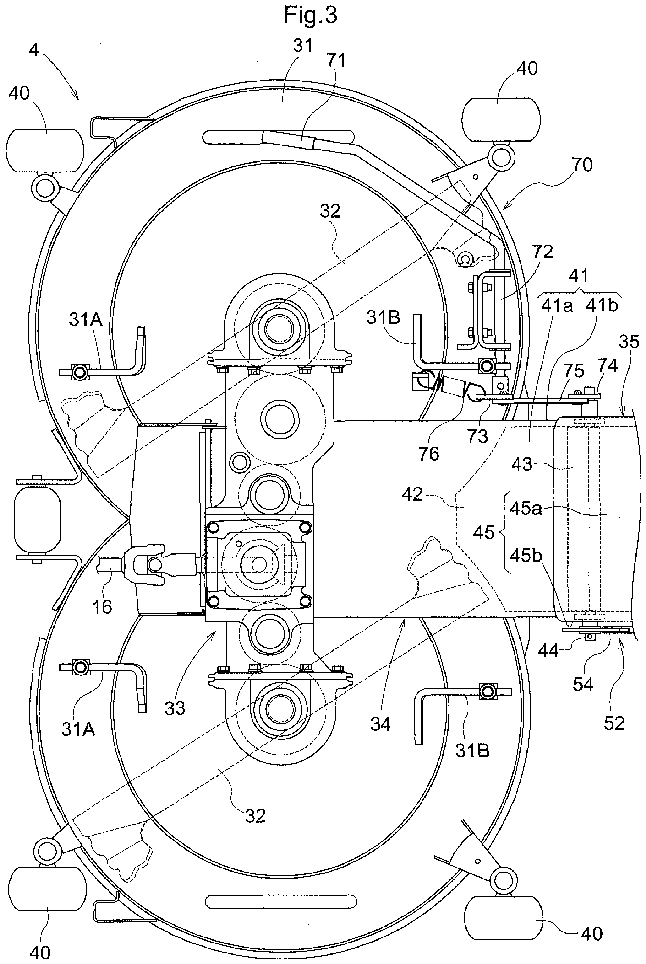

As shown in Fig. 3, the mower 4 has an arrangement in which two blades 32 are disposed on the left and right sides inside a cutter blade housing 31. The left blade 32 is rotatably driven clockwise and the right blade 32 is rotatably driven counterclockwise. In this way, the respective blades 32 are rotatably driven in opposite directions. And, as the left blade 32 is driven clockwise and the right blade 32 is driven counterclockwise, cut grass pieces as riding on a conveying air current generated in association with the rotations of the two blades are discharged to the rear side from the discharging section 34 formed near the center of the rear portion of the cutter blade housing 31. The cut grass pieces discharged from the discharging section 34 will then be guided by a grass collecting duct 35 connected to this discharging section 34 and sent into the grass collecting container 5 (see Fig. 1) to be accommodated therein.

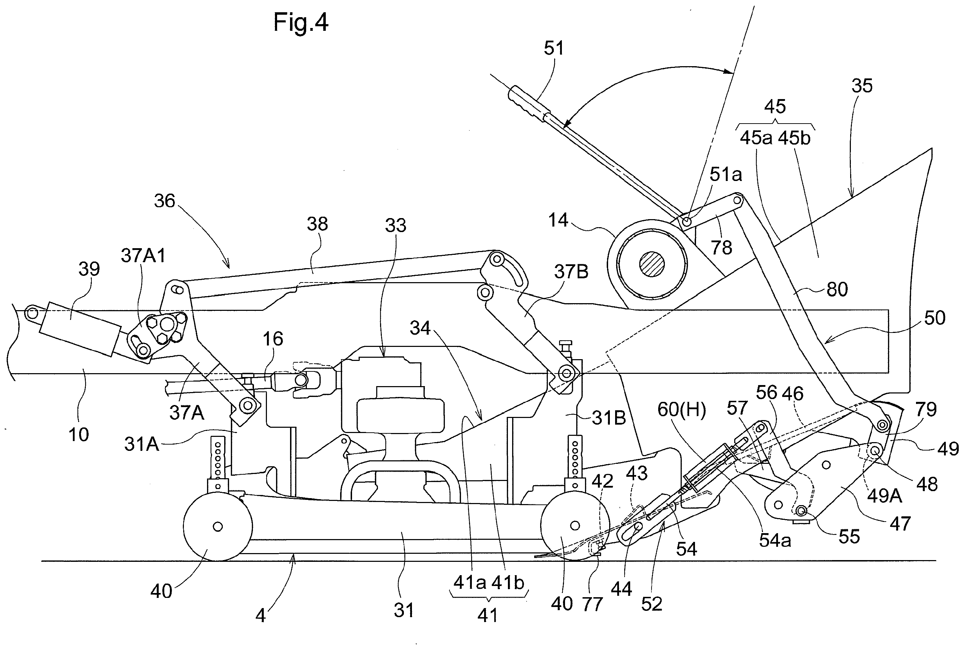

As shown in Fig. 4, the mower 4 is supported to the machine body frame 10 via a lift link mechanism 36 to be liftable up/down. The lift link mechanism 36 includes, one set on each left and right side thereof, a pair of front and rear pivot links 37A, 37B having upper end sides thereof pivotally connected to the machine body frame 10 and having lower end sides thereof pivotally connected to the cutter blade housing 31.

And, at a front side portion and a rear side portion respectively at the upper portion of the cutter blade housing 31, there are vertically disposed a pair of left and right vertically oriented extension portions 31A, 31B extending upwards from the upper (top) face of the cutter blade housing 31. As shown in Fig. 3, the front side vertically oriented extension portion 31A and the rear side vertically oriented extension portion 31B each has a shape of a plate bent in approximately L shape as seen in the plan view and integrally connected to the upper face of the cutter blade housing 31 by welding.

The front side pivot link 37A has its one end pivotally connected to the machine body frame 10 of the traveling machine body 1 to be pivotable about a horizontally oriented axis and has its other end pivotally connected to an upper portion of the front side vertically oriented extension portion 31A to be pivotable about a horizontal axis. On the other hand, the rear side pivot link 37B has its one end pivotally connected to the machine body frame 10 of the traveling machine body 1 to be pivotable about a horizontally oriented axis and has its other end pivotally connected to an upper portion of the rear side vertically oriented extension portion 31B to be pivotable about a horizontally oriented axis.

As shown in Fig. 4, the front side pivot link 37A and the rear side pivot link 37B have upper end sides thereof operably coupled to each other via a coupling rod 38 and one end portion of a lifting hydraulic cylinder 39 is pivotally connected to an operational portion 37A1 formed in the front side pivot link 37A. The other end portion of the hydraulic cylinder 39 is pivotally connected to the machine body frame 10. As the pivot links 37A, 37B are pivotally operated in association with an expansion/contraction movement of the hydraulic cylinder 39, the mower 4 can be lifted up/down. Under a mowing operation condition, the mower 4 carries out a mowing traveling operation with placing gauge wheels 40 provided at the lower end portion of the cutter blade housing 31 in contact with the ground surface.

As shown in Figs. 3, 4 and 5, the discharging section 34 is formed to extend rearwards obliquely upwards to a position rearwardly of the left/right center portion of the cutter blade housing 31. The discharging section 34 includes a discharging section body 41 formed integrally and continuously with the cutter blade housing 31 and a guide member 42 forming the bottom of the discharging section body 41. The discharging section body 41 includes a ceiling face 41a and left and right opposed side faces 41b and formed in a reverse (upside down) U-shape as seen in the front/rear direction. And, a plate-like guide member 42 is provided to cover the lower side of the inner space formed by the discharging section body 41 and the guide member 42. Therefore the discharging section body 41 and the guide member 42 together form a approximately rectangular cylindrical conveying passage which extends obliquely upwardly rearwards. In midway of the conveying passage of the guide member 42, there is formed an upward guiding face 43 for guiding cut grass pieces upwards.

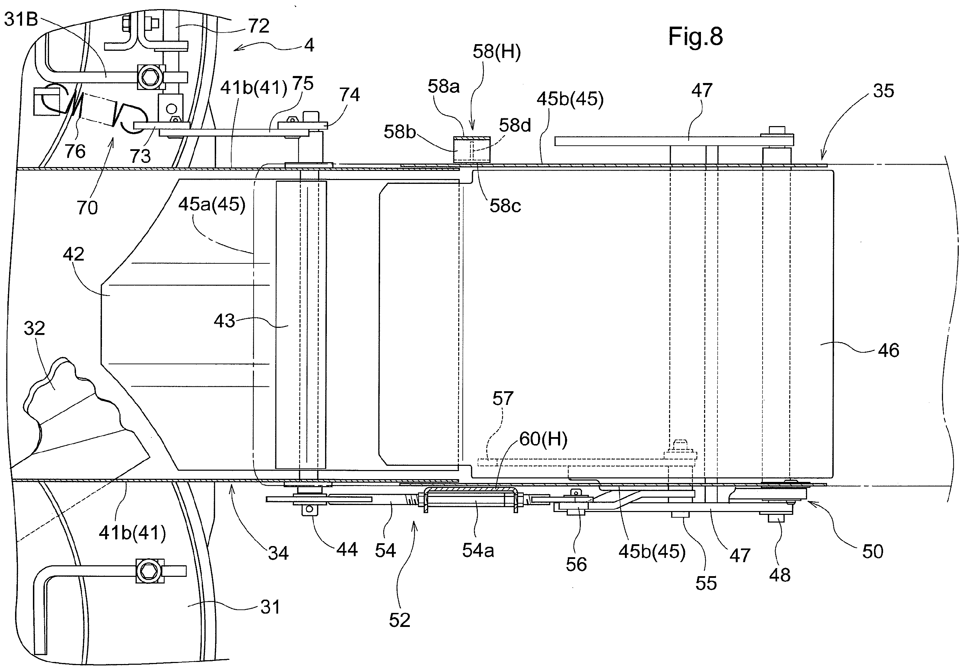

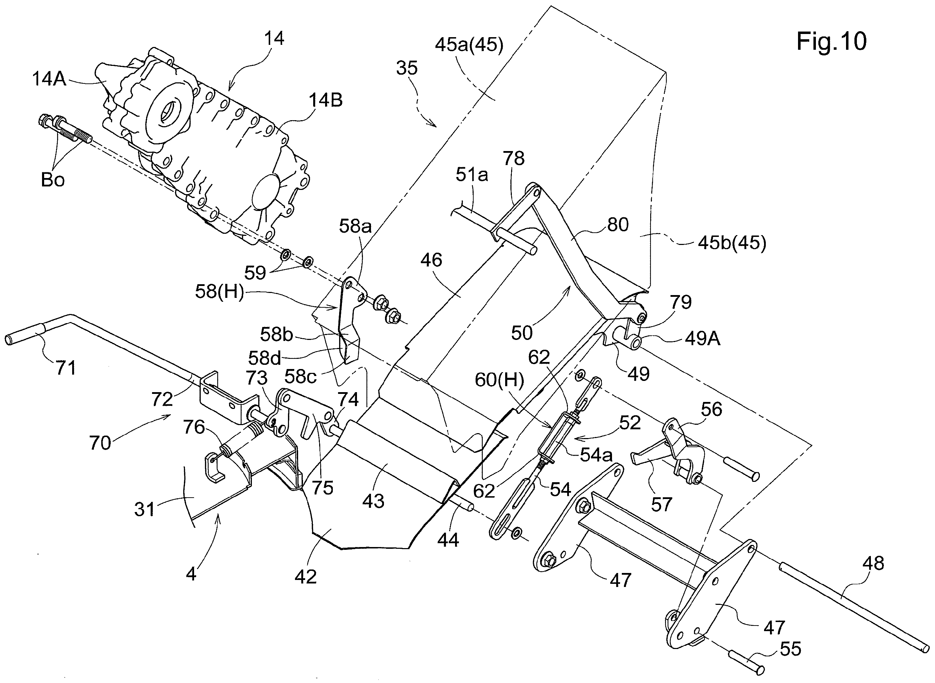

As shown in Fig. 8 and Fig. 10, the guide member 42 is vertically pivotally supported to the cutter blade housing 31 via a support shaft 44 extending between the left and right opposed side faces 41b of the discharging section body 41. The guide member 42 is operably coupled to a first operational lever 71 provided adjacent the driver's seat 20 via a first coupling mechanism 70. The guide member 42 is pivotally operable by a manual operation of the first operational lever 71. When there occurs clogging of cut grass pieces in the discharging section 34 in association with a grass mowing work, by reciprocally pivotally operating the first operational lever 71, the clogging of the cut grass pieces can be resolved to allow conveying thereof.

As shown in Figs. 3, 5 and 8, the first coupling mechanism 70 includes the first operational lever 71 having a left/right oriented support shaft portion 72 and vertically pivotally supported to a right end portion of the cutter blade housing 31, a first arm 73 fixed to a left end portion of the support shaft 72, a second arm 74 fixed to a right end portion of the support shaft 44, a push-pull link 75 for operably coupling the first arm 73 with the second arm 74, a tensile spring 76, and so on. As the first arm 73 is pivotally urged in a forwardly inclining direction by a function of the tensile spring 76 and also is restricted in its movement by an abutment portion 77, the guide member 42 is maintained under a rearwardly elevated guiding posture. When the first operational lever 71 is pivotally pulled rearwardly upwards, the guide member 42 can be pivoted from the rearwardly elevated guiding posture in the forwardly upward direction against the urging force of the tensile pull spring 76.

If clogging of adhesive accumulation of cut grass pieces to the guide member 42 occurs in the discharging section 34 in the course of a grass mowing work, the driver, as being seated at the driver's seat 20, will vertically pivot the first operational lever 71, whereby the guide member 42 can be vertically pivoted to eliminate the adhering accumulated cut grass pieces.

### [Grass Collecting Duct]

Next, the grass collecting duct 35 will be explained.

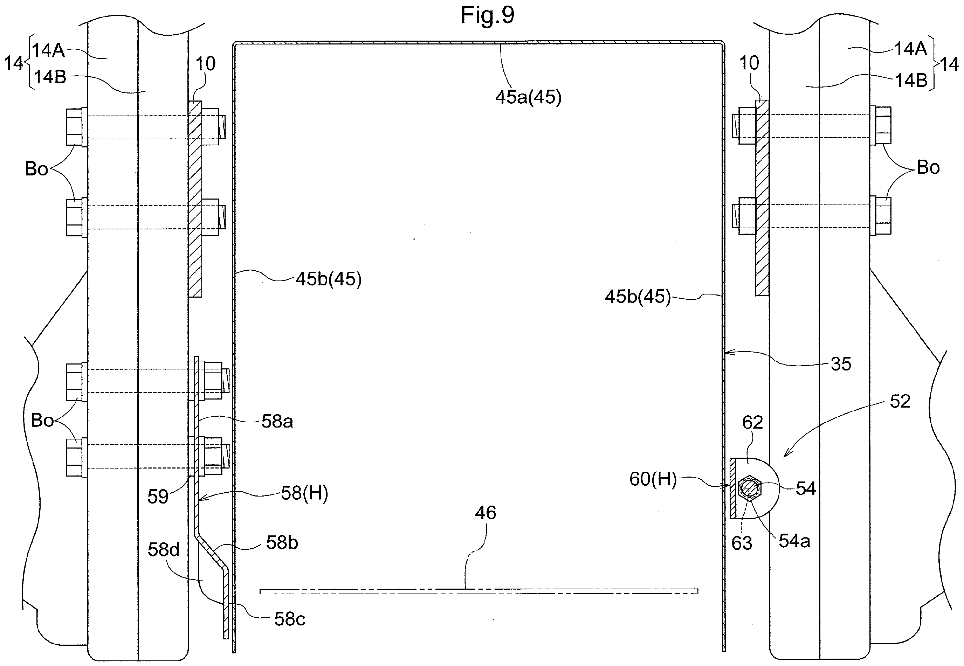

As shown in Figs. 3, 4, 5 and 8, the grass mowing machine includes the grass collecting duct 35 connected in communication with the discharging section 34 formed in the cutter blade housing 31 and configured to guide cut grass pieces sent out from the discharging section 34. As shown in Fig. 1 and Fig. 9, this duct 35 is provided to extend in the front/rear direction in the space formed between the left and right transmission cases 14.

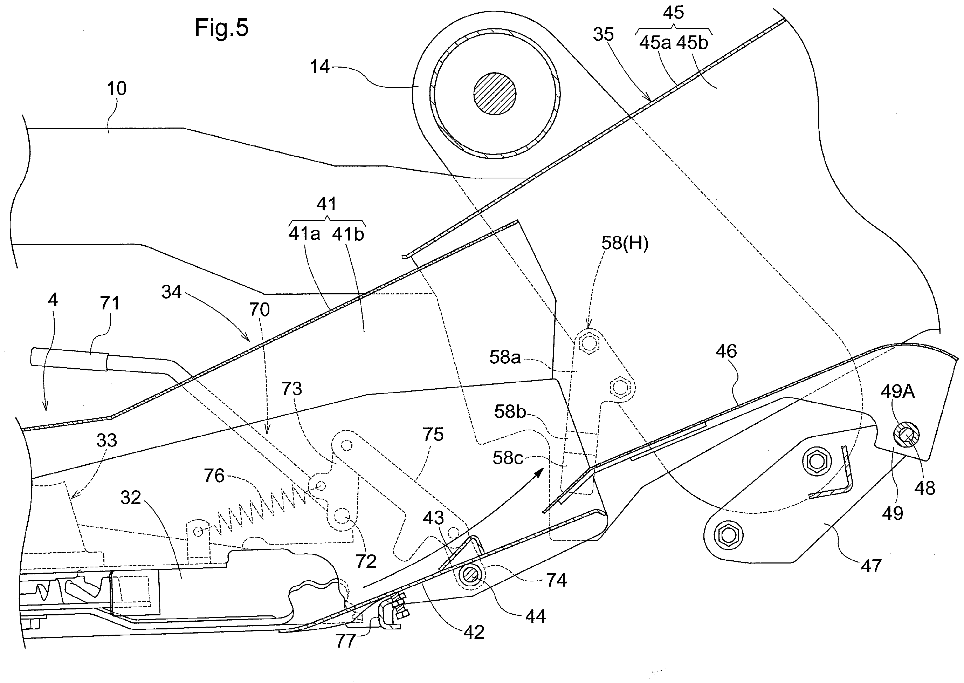

As shown in Figs. 5, 8 and 9, the duct 35 includes a duct body 45 and a bottom plate 46. The duct body 45 includes a ceiling face 45a and left and right opposed side faces 45b and is provided in the form of reverse (upside down) U-shape as seen in the front/rear direction. And, the planar bottom plate 46 is provided in such a manner as to cover the lower side of the inner space formed by the duct body 45. Therefore, like the discharging section 34 of the mower 4, the inner area surrounded or delimited by the duct body 45 and the bottom plate 46 forms a conveying passage in the form of an approximately rectangular cylindrical shape which extends obliquely upwards.

On the left and right opposed outer sides of the duct 35, there are provided support members 47 which are fixed in position there. Though not shown, each support member 47 is supported in position-fixed state as being connected to the machine body frame 10, the transmission cases 14, etc. The bottom plate 46 of the duct 35 is supported by the left and right support members 47 to be vertically pivotable about a horizontal axis. More particularly, as shown in Figs. 5, 8 and 10, a pivot support shaft 48 is provided astride the left and right support members 47. And, left and right support arms 49 are integrally connected to the lower face of the bottom plate 46 and extend rearwardly downwards. Boss portions 49A provided at extension end portions of the left and right support arms 49 are pivotally fitted and supported on the pivot support shaft 48.

The bottom plate 46 of the duct 35 is operably coupled with a second operational lever 51 provided on a lateral side of the driver's seat 20 via s second coupling mechanism 50, so that the bottom plate 46 can be pivotally operated by an operation of the second operational lever 51. As shown in Fig. 4 and Fig. 10, the second operational lever 51 is supported to be pivotable by a horizontally oriented shaft portion 51a, and to a left end portion of this horizontally oriented shaft portion 51a, a first arm 78 is provided to be pivotable therewith. The first arm 78 and a second arm 79 provided continuous from the pivot boss portion 49A of the support arm 49 are operably coupled to each other via a push-pull link 80. Therefore, when the second operational lever 51 is pivotally operated, with the coupling arrangement of the second coupling mechanism 50, the bottom plate 46 is pivoted. As a result, like the guide member 42, if cut grass clogging has occurred inside the duct 35 in association with a grass mowing work, by reciprocatively pivotally operating the second operational lever 51, the cut grass clogging can be resolved and the released cut grass pieces can be conveyed.

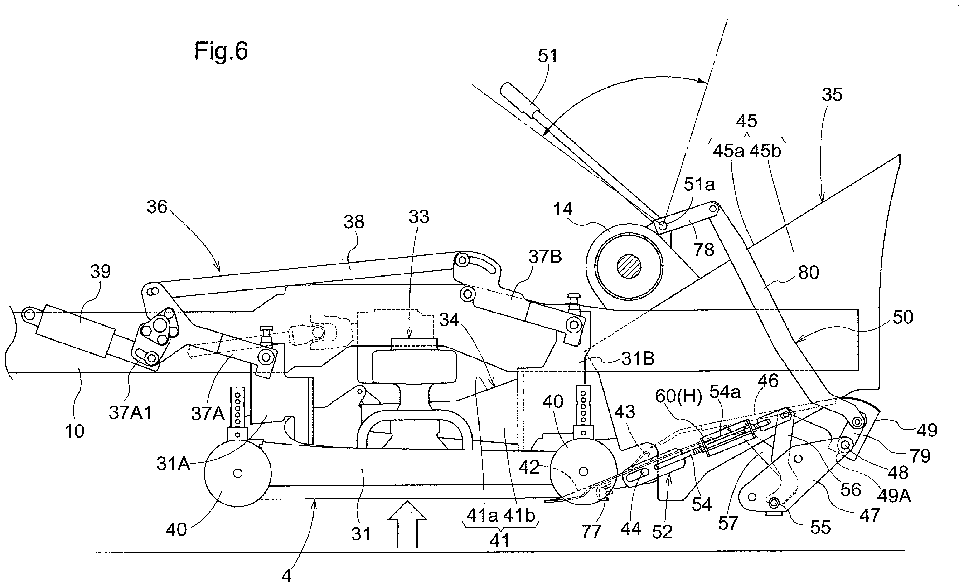

In addition to the posture switchover by the operational lever 51, the bottom plate 46 of the duct 35 can be posture-changed also in operative association with a lifting up/down operation of the mower 4. More particularly, as shown in Figs. 4 and 6, in order to allow such posture change of the bottom plate 46 in association with a lifting up/down of the mower 4, a mower coupling mechanism 52 is provided for operably coupling the mower 4 with the bottom plate 46. This mower coupling mechanism 52 is provided to be positioned on the left outer side of the duct 35.

The mower coupling mechanism 52 includes a push-pull link 54 having one end portion thereof operably coupled to the left end portion of the support shaft 44 supporting the guide member 42, a pivot pin 55 provided in the support member 47, a first pivot arm 56 to which the other end portion of the push-pull link 54 is pivotally connected and which is pivotally supported by the pivot pin 55, and a second pivot arm 57 supported to the pivot pin 55 to be pivotable therewith and having a pivotal end which comes into contact with the lower face of the bottom plate 46. The push-pull link 54 includes a turnbuckle portion 54a.

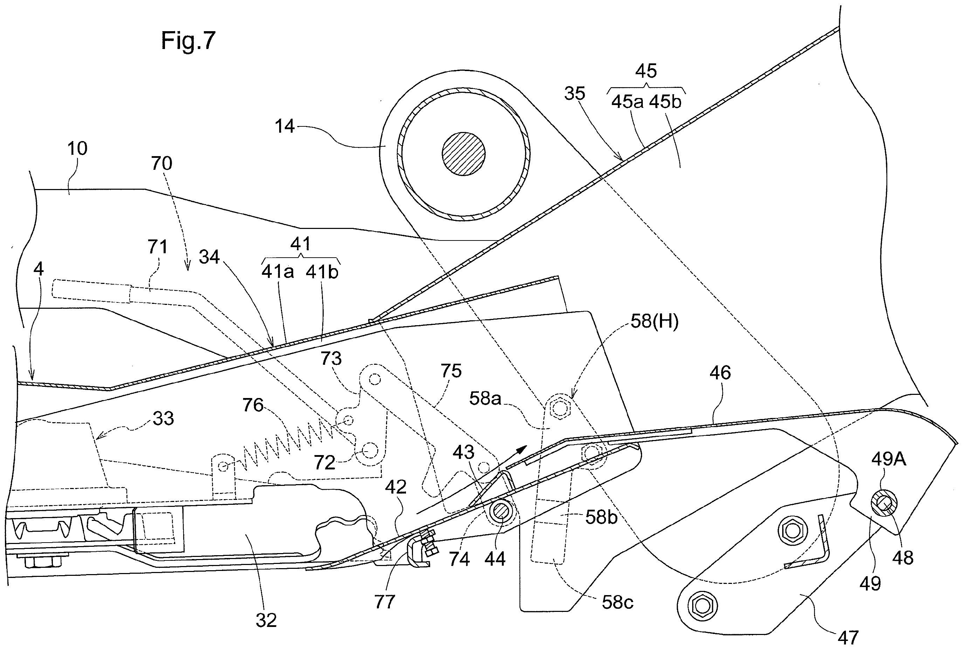

When the mower 4 is elevated, in association therewith, the support shaft 44 is elevated to push the push-pull ink 54, whereby the first pivot arm 56 and the second pivot arm 57 are pivoted to change posture of the bottom plate 46 into the forwardly elevated state (see Fig. 7). Conversely, when the mower 4 is lowered, the pivot shaft 44 is lowered to pull the push-pull link 54, whereby the first pivot arm 56 and the second pivot arm 57 are pivoted to change posture of the bottom plate 46 into the forwardly lowered state (see Fig. 5). As a result, it is possible to prevent damage from being given to the bottom plate 46 due to elevating and lowering of the mower 4 and to prevent inadvertent discharging of cut grass pieces from a gap formed between the guide member 42 and the bottom plate 46.

The coupling portion of the push-pull link 54 to the pivot shaft 44 is provided as an elongate hole, so that even with posture switchover by an operation of the operational lever 51, there will occur no pivotal movement of the guide member 42 in association therewith and there will occur no pivotal movement of the bottom plate 46 in association with the pivotal operation of the guide member 42, either.

### [Deformation Preventing Member]

As shown in Figs. 5, 8, 9 and 10, on the right side of the duct 35, there is provided a duct stopper 58 as a right-side "deformation preventing member" H for suppressing posture change of the duct body 45 to the outer side by coming into contact from the outer side in the lateral width direction with a rear lower end vicinity portion of the right side face 41b as a "connecting portion" of the duct body 45 for its connection to the discharging section 34. As shown in Figs. 9 and 10, this duct stopper 58 is formed by bending a plate member into an approximately Z shape to include an upper portion side attaching plate portion 58a, a relaying portion 58b continuous from the lower portion of the attaching plate portion 58a and extending obliquely outwards to the lower side, and a contacting portion 58c continuous from the lower portion of the relaying portion 58b and extending along the left side face of the duct body 45. Further, between the outer face of the relaying portion 58b and the outer face of the contacting portion 58c, there is provided a reinforcing rib 58d integrally.

The duct stopper 58 is provided with its attaching plate portion 58a being connected to the transmission case 14 and its contacting portion 58c being in contact or disposed near the right side face 45b of the duct body 45. The transmission case 14 is comprised of halved separate cases 14A, 14B flange-connected to each other in order to facilitate assembly of e.g. a chain transmission mechanism or the like. As shown in Fig. 9, the left and right separate cases 14A, 14B are connected to each other via bolts Bo, with flange portions formed as separate faces being placed in abutment against each other.

And, the attaching plate portion 58a of the duct stopper 58 is connected and fastened with effective utilization of the flange connecting bolts Bo. With disposing a washer 59 between the duct stopper 58 and the transmission case 14, the contacting portion 58c is pressed and attached to the right side face 45b of the duct 35.

As shown in Figs. 8, 9 and 10, on the left side of the duct 35, there is provided a U-shaped receiving member 60 as a left side "deformation preventing member" H for suppressing posture change of the duct body 45 to the outer side by coming into contact from the outer side in the lateral width direction with the rear lower end portion vicinity of the left side wall 45b as a "connecting portion" of the duct body 45 to the discharging section 34.

As described above, on the left side of the duct 35, the mower coupling mechanism 52 is provided. As shown in Figs. 8 and 10, the receiving member 60 is provided as being fixed to the push-pull link 54 of the mower coupling mechanism 52. The receiving member 60 is provided in the form of approximate U shape as a whole with forming, on the opposed end portions in the longitudinal direction of a band-like member with bent portions 62 bent in a same direction. And, as the push-pull link 54 is inserted into through holes 63 (see Fig. 9) formed in the bent portions 62 on the opposed sides, the receiving member 60 is integrally connected and attached to the outer side of the turnbuckle portion 54a. The receiving member 60 is provided in vicinity of the left side face 45b of the duct body 45. Between the receiving member 60 and the side face 45b, there is provided a slight gap to such a degree not to interfere with the side plate by a pivotal operation of the bottom plate 46.

With application of the above-described configuration, on the right side of the duct 35, with the contacting of the duct stopper 58, posture change of the duct body 45 to the outer side can be suppressed. On the left side of the duct 35, with the contacting of the receiving member 60, posture change of the duct body 45 to the outer side can be suppressed.

### [Other Embodiments]

### (1) [Mower Coupling Mechanism of Further Embodiment]

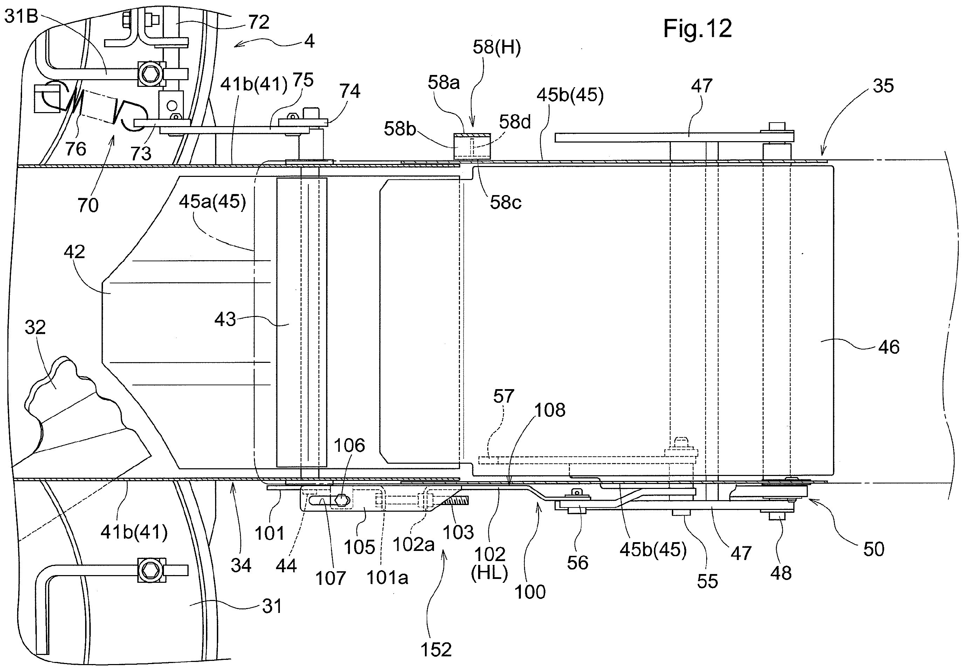

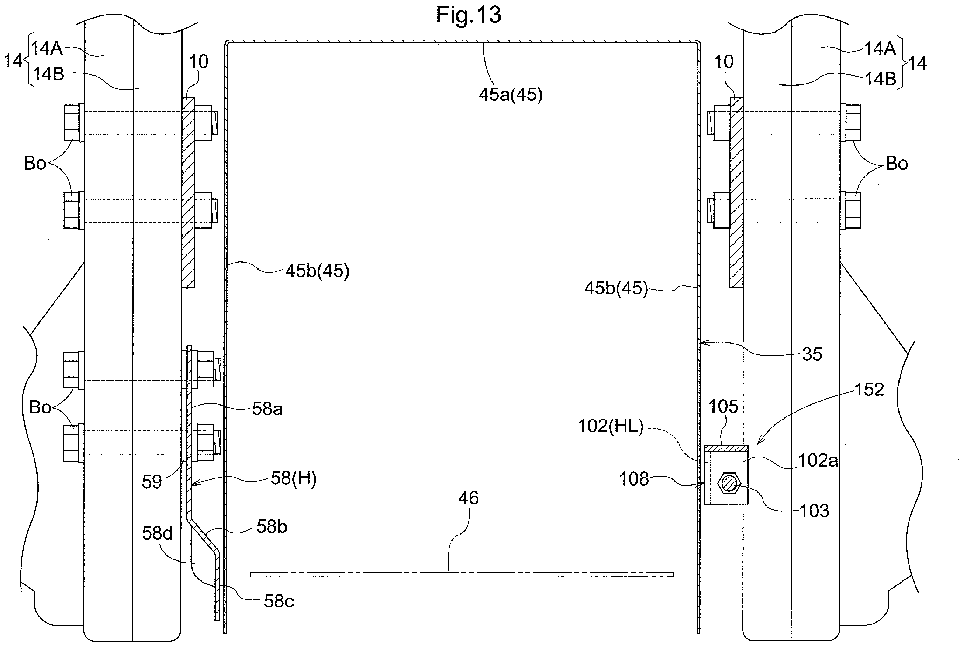

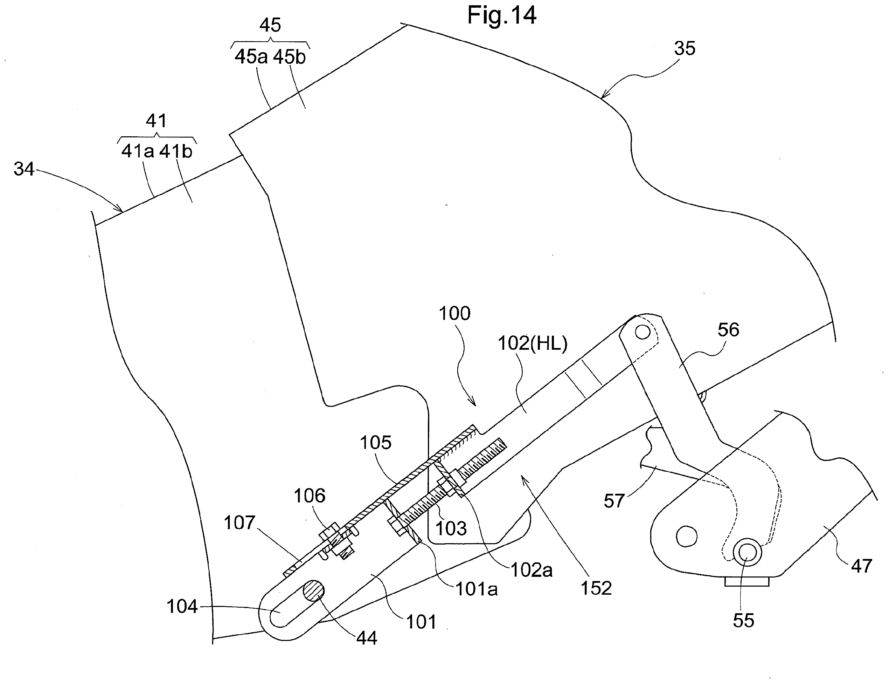

A mower coupling mechanism 152 according to a further embodiment, as shown in Figs. 12, 13, 14, includes a first pivot arm 56, a second pivot arm 57, and a coupling member 100 for operably coupling the free end portion of the first pivot arm 56 to the left end portion of the support shaft 44. The coupling member 100 includes a front coupling portion 101 having a front portion thereof coupled with the pivot shaft 44, a rear coupling portion 102 having a rear end portion thereof coupled with the free end portion of the first pivot arm 56, and an intermediate coupling portion 103 coupled with a front end portion 102a of the rear coupling portion 102 and to a rear end portion 101a of the front coupling portion 101. The coupling between the front coupling portion 101 and the support shaft 44 is effected via an elongate hole 104 provided in the front coupling portion 101 with the support shaft 44 being slidably engaged therein. With this arrangement, even when a pivotal operation of the bottom plate 46 is effected by the second operational lever 51 (see Fig. 1), the guide member 42 is prevented from being pivoted in association therewith. Also, even when a pivotal operation of the guide member 42 is effected by the first operational lever 71 (see Fig. 1), the bottom plate 46 is prevented from being pivoted in association therewith. The intermediate coupling portion 103 is constituted of a screw shaft that allows change of the coupling position of this intermediate coupling portion 103 to the rear coupling portion 102. By changing the coupling position of the intermediate coupling portion 130 to the rear coupling portion 102, length adjustment of the coupling member 100 is possible. A reinforcing member 105 is connected to and between the front coupling portion 101 and the rear coupling portion 102. The coupling between the reinforcing member 105 and the rear coupling portion 102 is effected by welding. The coupling between the reinforcing member 105 and the front coupling portion 101 is effected by a coupling bolt 106. A bolt hole 107 provided for attaching the coupling bolt 106 to the reinforcing member 105 is provided as an elongate hole that allows the length adjustment of the coupling member 100 by the intermediate coupling portion 103. The front coupling portion 101, the rear coupling portion 102 and the reinforcing member 105 are constituted of plate-like members.

### (2) [Deformation Preventing Member of Further Embodiment]

A deformation preventing member HL according to a further embodiment is constituted of the rear coupling portion 102 as shown in Figs. 12, 13 and 14. The rear coupling portion 102 is constituted of a plate-like member. The deformation preventing member HL includes a support face 108 along the side face of the duct 35 and functions to prevent posture deformation of the duct 35 by coming into contact with this duct 35 via the support face 108.

(3) In the foregoing embodiment, the duct stopper 58 as the deformation preventing member on the right side of the duct 35 is connected and fastened to the transmission case 14 via the flange connecting bolts Bo of the transmission case as a "machine-body side fixed portion". In place of this arrangement, the duct stopper may be connected to the transmission case 14 via a separately provided special connecting tool provided for the transmission case 14 and it may be connected to the machine body frame 10 as the machine-body side fixed portion, in place of the transmission case 14. Further alternatively, the deformation preventing member may not be provided in the machine-body side fixed portion, but may extend to bypass the lower side of the duct 35 to interconnect the left and right opposed side faces of the duct body 45 for maintaining it in position. Various other arrangements will be possible also.

(4) In the foregoing embodiment, the receiving member 60 as the "deformation preventing member" on the left side of the duct 35 is provided in the push-pull link 54. In place of this arrangement, the receiving member 60 too may be connected to the transmission case 14 in the same manner as the duct stopper 58 or may be connected to the machine body frame 10.

### INDUSTRIAL APPLICABILITY

The present invention is applicable to a riding grass mowing machine having a mower at a rear portion of the machine body.

### DESCRIPTION OF REFERENCE SIGNS

- 3:: traveling wheel
- 4:: mower
- 14:: transmission case
- 14A, 14B:: separate cases
- 34:: discharging section
- 35:: duct
- 46:: bottom plate
- 52:: coupling mechanism
- 100:: coupling mechanism
- H:: deformation preventing member
- HL:: deformation preventing member
- Bo:: bolt

## Claims

1. A grass mowing machine comprising:
a mower (4) disposed under a machine body (1) and configured to discharge cut grass pieces sent from a discharging section (34) to the outside:
a duct (35) connected to the discharging section (34) to be in communication thereto and configured to guide the cut grass pieces from the discharging section; and
a grass collecting section (5) disposed at a rear portion of the machine body and configured to collect the cut grass pieces guided by the duct;
wherein a deformation preventing member (H, HL) is provided for preventing posture deformation at a connecting portion (41b) of the duct (35 for its connection to the discharging section.

2. The grass mowing machine of claim 1, wherein the deformation preventing member (H, HL) is provided between the connecting portion (41b) of the duct (35) for its connection to the discharging section (34) and a machine-body side fixed portion (10, 14), so that the deformation preventing member prevents the posture deformation of the duct by being received by the machine-body side fixed portion.

3. The grass mowing machine of claim 2, wherein the machine-body side fixed portion comprises a transmission case (14) incorporating a transmission mechanism for transmitting power to a traveling wheel (3).

4. The grass mowing machine of claim 3, wherein:
the transmission case (14) comprises two halved separate cases (14A, 14B) flange-connected to each other; and
the deformation preventing member (H, HL) is connected to the transmission case and fastened therewith via a flange-connecting bolt (Bo) of the transmission case.

5. The grass mowing machine of any one of claims 1 to 4, wherein:
the mower (4) is supported to the machine body (1) to be liftable up/down relative thereto;
a bottom plate (46) of the duct is changed in its posture in association with a lifting up/down of the mower;
a coupling mechanism (50) is provided for operably coupling the mower to the bottom plate;
the deformation preventing member (H, HL) is provided between the connecting portion (41b) of the duct (35) for its connection to the discharging section (34) and the coupling mechanism; and
the deformation preventing member is received by the coupling mechanism for preventing posture deformation of the duct (35).

6. The grass mowing machine of any one of claims 1-5, wherein the deformation preventing member (HL) includes a support face (108) extending along the lateral face of the duct (35) and the deformation preventing member prevents posture deformation of the duct as it comes into contact with the duct via the support face.
